# EUROPÄISCHE PATENTANMELDUNG

(11) **EP 1 701 351 A2**
(43) Veröffentlichungstag der Anmeldung: **13.09.2006**
(21) Anmeldenummer: 06002181.3
(22) Anmeldetag: 02.02.2006
(51) Int. Cl.: G11B 27/034, G11B 27/10

(54) **Verfahren zur Aufzeichnung, Wiedergabe und zum Schneiden eines digitalen Datenstroms sowie Gerät der Unterhaltungselektronik und Computerprogramm-Produkt zur Durchführung des Verfahrens**

(30) Priorität: 11.03.2005 DE 102005011428
(71) Anmelder: Fujitsu Siemens Computers GmbH, 80807 München (DE)
(72) Erfinder: Gossner, Edmund, 86480 Winzer (DE)
(74) Vertreter: Epping - Hermann - Fischer

(57) **Zusammenfassung**

Verfahren zur Aufzeichnung eines digitalen Datenstromes (7) mit darin enthaltenen Codierungsparametern (11) unter Verwendung einer Empfangsvorrichtung (2) zum Empfangen eines digitalen Datenstromes (7), einer Aufzeichnungsvorrichtung (4) zum Aufzeichnen des digitalen Datenstromes (7) und einer Erkennungsvorrichtung (3) zum Erkennen von vorbestimmten Codierungsparametern (11) des digitalen Datenstromes (7), dadurch gekennzeichnet, dass beim Aufzeichnen des digitalen Datenstromes (7) der digitalen Datenstrom (7) auf Änderungen zumindest eines vorbestimmten Codierungsparameters (11) überwacht wird und ein Ereignissignal (13) erzeugt wird, wenn eine Änderung des zumindest einen vorbestimmten Codierungsparameters (11) erkannt wird.

## Beschreibung

Verfahren zur Aufzeichnung, Wiedergabe und zum Schneiden eines digitalen Datenstroms sowie Gerät der Unterhaltungselektronik und Computerprogramm-Produkt zur Durchführung des Verfahrens

Die Erfindung betrifft ein Verfahren zur Aufzeichnung eines digitalen Datenstroms mit darin enthaltenen Codierungsparametern unter Verwendung einer Empfangsvorrichtung zum Empfang eines digitalen Datenstroms, einer Aufzeichnungsvorrichtung zum Aufzeichnen des digitalen Datenstroms und einer Erkennungsvorrichtung zum Erkennen von vorbestimmten Codierungsparametern des digitalen Datenstroms.

Digitale Datenströme mit darin enthaltenen Codierungsparametern sind beispielsweise als Fernseh- und Radiosignale bekannt. Eine Aufzeichnung solcher Signale zum Zwecke der späteren Wiedergabe dient dazu, um Sendungen zu archivieren oder zeitversetzt anzuschauen bzw. anzuhören.

Geräte und Verfahren zur Aufzeichnung solcher digitaler Datenströme umfassen z.B. analoge und digitale Videorecorder, die ein vorbestimmtes Fernsehsignal zwischen einer Start- und einer Endzeit auf einem wechselbaren Speichermedium wie zum Beispiel einer Videokassette oder einer aufnahmefähigen Videodisk (DVD-R) aufzeichnen. Zunehmend werden zu einer Aufzeichnung auch Computer oder andere Multimediageräte eingesetzt. Die Aufzeichnung erfolgt dann häufig auf einer Festplatte oder einem anderen nichtflüchtigen Massenspeicher.

Insbesondere Fernsehsendungen werden häufig von Werbung oder anderen störenden Elementen, wie z.B. Hinweisen auf nachfolgende Programme oder Nachrichtenschlagzeilen, unterbrochen. Bei einer späteren Wiedergabe sollen solche unerwünschten Unterbrechungen nach Möglichkeit übergangen werden oder erst gar nicht mit aufgezeichnet werden.

Dabei ist eine Kennzeichnung von Unterbrechungen durch den Sender des Datenstromes technisch zwar möglich, wird aber aus wirtschaftlichen Überlegungen oft nicht durchgeführt. Denn insbesondere private Fernsehanbieter sind abhängig von den durch Werbeeinblendungen erzielten Einnahmen. Eine Erkennung der störenden Programmunterbrechungen muss daher auf Seiten des Empfängers durchgeführt werden.

Aus technischer Sicht ist problematisch, dass bei Aufzeichnung einer Sendung einschließlich der störenden Elemente die Gesamtaufzeichnungsdauer sehr groß ist. Daher ist zum Beispiel die Aufzeichnungskapazität eines eingesetzten Datenträgers nicht ausreichend oder bei digitalen Aufzeichnungsgeräten ein hoher Einsatz von Speicherkapazität erforderlich.

Zur Lösung dieses Problems sind verschiedene Ansätze bekannt. Eine Lösung macht sich beispielsweise zu Nutze, dass Anbieter eines Datenstroms oft ein eigenes Kennzeichen in den Datenstrom einprägen. Dies kann z.B. das Logo eines Fernsehsenders sein, das während der Ausstrahlung eines Programms eingeblendet, während der Ausstrahlung von Programmunterbrechungen jedoch unterdrückt wird. Das Vorhandensein eines solchen Kennzeichens kann mithilfe von Bilderkennungsalgorithmen erkannt werden, sodass eine Aufzeichnung des Datenstroms während der Unterdrückung des Kennzeichens ebenfalls unterdrückt wird. Ein solcher Lösungsansatz hat zum Nachteil, dass nicht alle Unterbrechungen sicher erkannt werden können. Z.B. werden solche anbietereigene Kennzeichen auch während der Ausstrahlung von Programmankündigungen oder Nachrichtensendungen verwendet. Zudem ist eine solche Erkennung von Kennzeichen technisch aufwändig und insbesondere dann schwierig, wenn sich das aufgeprägte Kennzeichen nicht klar von dem digitalen Datenstrom absetzt. Dies ist beispielsweise der Fall, wenn ein Logo eines Fernsehsenders farblich dem ausgestrahlten Fernsehsignal sehr nahe kommt.

Kommt für die Aufzeichnung des digitalen Datenstroms ein Computer oder ein anderes Gerät mit einem Datenanschluss zum Einsatz, können Informationen über Schnittmarken, die Unterbrechungen des Datenstromes kennzeichnen, auch aus einem Datennetz wie z.B. dem Internet empfangen werden. Dabei werden Programmunterbrechungen beispielsweise durch einen Dienstanbieter manuell ermittelt und dementsprechende Schnittmarken an die Aufzeichnungsvorrichtung von Kunden des Dienstanbieters übertragen. Die Aufzeichnungsvorrichtung des Kunden kann die empfangenen Schnittmarken auswerten und die Aufzeichnung an den vorgegebenen Stellen unterbrechen.

Durch eine solche Lösung entstehen dem Empfänger des digitalen Datenstroms in der Regel zusätzliche Kosten. Zum einen muss er den zusätzlichen Dienstanbieter, der die-Schnittmarken der Programmunterbrechungen bereitstellt, für seine Dienste bezahlen, zum anderen muss während der Aufzeichnung des digitalen Datenstromes eine Verbindung zu einem Datennetzwerk bestehen. Zudem werden oft nicht Markierungen für alle zur Verfügung stehenden Datenströme bereitgestellt, sondern nur für solche, die entweder in eine bestimmte Zeitspanne, z.B. abends zwischen 18 und 24 Uhr, oder nur für solche, die von bestimmten Sendern von digitalen Datenströmen ausgestrahlt werden. Soll ein digitaler Datenstrom aufgezeichnet werden, für den keine Schnittmarken der Programmunterbrechung zur Verfügung gestellt werden, kann das Verfahren nicht angewendet werden.

Der Erfindung liegt daher die Aufgabe zugrunde, ein Verfahren anzugeben, dass eine sichere Erkennung von Programmunterbrechungen gestattet, wobei nur bereits in dem digitalen Datenstrom enthaltene Informationen verwendet werden sollen. Dabei soll ein solches Verfahren einfach zu realisieren sein und für den Empfänger des digitalen Datenstroms keine zusätzlichen Kosten verursachen.

Die Aufgabe wird erfindungsgemäß durch ein Verfahren gemäß Patentanspruch 1 gelöst.

Das erfindungsgemäße Verfahren macht sich zu Nutze, dass digitale Datenströme außer den darin enthaltenen Nutzdaten zusätzlich auch Codierungsparameter des digitalen Datenstromes enthalten. Beispielsweise enthält ein digitales Fernsehsignal Codierungsparameter, die die verwendete Bildschirmauflösung, das verwendete Bildschirmformat sowie Angaben zu darin enthaltenen Tonspuren enthalten. Während Spielfilme z.B. oft ein Bildformat mit einem Seitenverhältnis von 16:9 verwenden, sind Werbeeinblendungen in der Regel an das Fernsehbildverhältnis von 4:3 angepasst. Daher kann ein Wechsel des Bildverhältnisses von 16:9 zu 4:3 beispielsweise dafür verwendet werden, um Unterbrechungen in einem Spielfilm zu erkennen. Andere Codierungsparameter, wie z.B. der Wechsel von Stereozu Monoton bzw. von 5-Kanalton auf 2-Kanalton, können ebenfalls zur Unterscheidung von Programmunterbrechungen genutzt werden.

Da ein einzelner Codierungsparameter, wie z.B. die Anzahl der verwendeten Tonspuren, oft zur sicheren Erkennung von Programmunterbrechungen nicht ausreicht, wird der digitale Datenstrom in einer vorteilhaften Ausgestaltung der Erfindung auf eine Änderung von mehreren Codierungsparametern überwacht. Beim Erkennen der Änderung von wenigstens einem der vorbestimmten Codierungsparameter wird dabei ein Ereignissignal erzeugt, beispielsweise in Form einer in dem aufgezeichneten Datenstrom untergebrachten zusätzlichen Markierung oder in Form einer parallel zu dem Datenstrom gespeicherten Tabelle, die Angaben zur Position der Änderung innerhalb des Datenstroms und der Art der Änderung enthält. Bei der nachfolgenden Wiedergabe oder dem Schnitt des aufgezeichneten digitalen Datenstroms, können dann entweder einzelne oder eine Kombination von mehreren Codierungsparametern zur Bestimmung von Programmunterbrechungen verwendet werden.

In einer weiteren vorteilhaften Ausgestaltung der Erfindung analysiert das Aufzeichnungsgerät die einem aufgezeichneten digitalen Datenstrom zugeordneten Markierungen oder Ereignissignale selber und wählt anhand von statistischen Informationen diejenigen Markierungen oder Signale aus, die Programmunterbrechungen kennzeichnen.

In einer weiteren Ausgestaltung der Erfindung werden die aufgezeichneten Markierungen dem Benutzer des digitalen Datenstroms angezeigt, sodass der Benutzer selbst die zum Schnitt bzw. zur Wiedergabe zu benutzenden Markierungen auswählen kann.

Weitere Einzelheiten und Ausgestaltungen der Erfindung sind in den Unteransprüchen angegeben.

Die Erfindung wird nachfolgend an einem Ausführungsbeispiel anhand der Zeichnungen näher erläutert. In den Zeichnungen zeigen:
Figur 1 eine schematische Darstellung eines Aufzeichnungsgerät zur Durchführung des erfindungsgemäßen Verfahrens,
Figur 2 eine schematische Darstellung eines ursprünglich empfangen Datenstroms, eines aufgezeichneten Datenstroms und eines geschnittenen Datenstroms,
Figur 3 ein Ablaufdiagramm eines ersten Verfahrens zur Wiedergabe eines digitalen Datenstroms, der mit dem erfindungsgemäßen Verfahren aufgezeichnet wurde,
Figur 4 ein Ablaufdiagramm eines zweiten Verfahren zur Wiedergabe eines digitalen Datenstroms, der mit dem erfindungsgemäßen Verfahren aufgezeichnet wurde,
Figur 5 eine Tabelle mit beispielhaften Einträgen zu erkannten Änderungen von überwachten Kodierungsparametern,
Figur 6 eine Tabelle mit beispielhaften Einträgen zu Sprüngen vom Start zum Ende von Unterbrechungen.

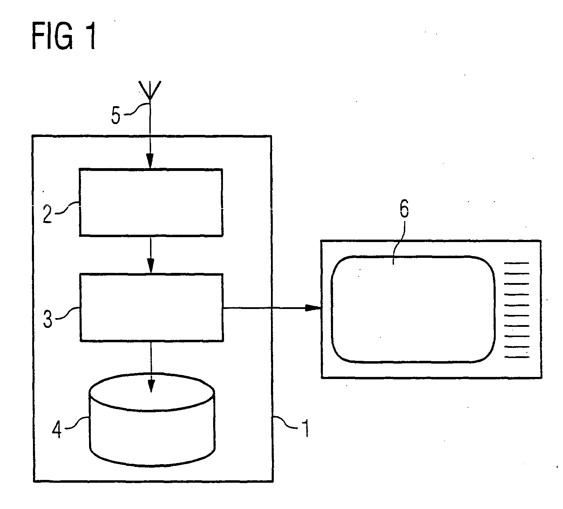

Figur 1 zeigt ein Aufnahmegerät 1, das eine Empfangsvorrichtung 2, eine Erkennungsvorrichtung 3 und eine Aufzeichnungsvorrichtung 4 umfasst. Das Aufnahmegerät 1 ist an eine Antenne 5 und an eine Wiedergabevorrichtung 6 angeschlossen.

Bei dem Aufnahmegerät 1 kann es sich beispielsweise um einen Personalcomputer handeln. Als Empfangsvorrichtung 2 kann dabei beispielsweise eine Fernsehkarte zum Empfang digitaler Fernsehsendungen gemäß dem MPEG-2 (Motion Picture Expert Group) oder MPEG-4-Standard eingesetzt werden. Als Erkennungsvorrichtung 3 kann dabei beispielsweise ein einfacher Parser, der den empfangenen Datenstrom auf vorbestimmte Merkmale wie zum Beispiel bestimmte Bitmuster hin überwacht, eingesetzt werden. Alternativ kann beispielsweise ein auf der Fernsehkarte befindlicher Spezialprozessor zum vollständigen Decodieren von MPEG-Signalen oder ein Decodierungsprogramm, das auf einem in dem Computer vorhandener Prozessor abläuft, eingesetzt werden, um den gesamten Datenstrom einschließlich der darin enthaltenen Codierungsparameter zu decodieren. Als Aufzeichnungsvorrichtung 4 kann beispielsweise eine in den Computer eingebaute Festplatte verwendet werden, um den empfangene Datenstrom und eine eventuell zusätzlich angelegte Tabelle mit Einträgen zu der Art und Position der Änderung von Codierungsparametern aufzuzeichnen.

Als Wiedergabevorrichtung 6 eignet sich beispielsweise ein an dem Computer angeschlossener Monitor mit eingebauten Lautsprechern.

Selbstverständlich können die Empfangsvorrichtung 2, die Erkennungsvorrichtung 3 und die Aufzeichnungsvorrichtung 4 auch in unterschiedlichen Geräten untergebracht sein. Beispielsweise kann eine externe, sogenannte Settop-Box zum Empfang bzw. zur Decodierung eines ausgestrahlten digitalen Datenstromes mit darin enthaltenen Codierungsparametern eingesetzt werden, wobei die Aufzeichnung durch ein Zusatzgerät, wie z.B. ein DVD-Recorder, erfolgt.

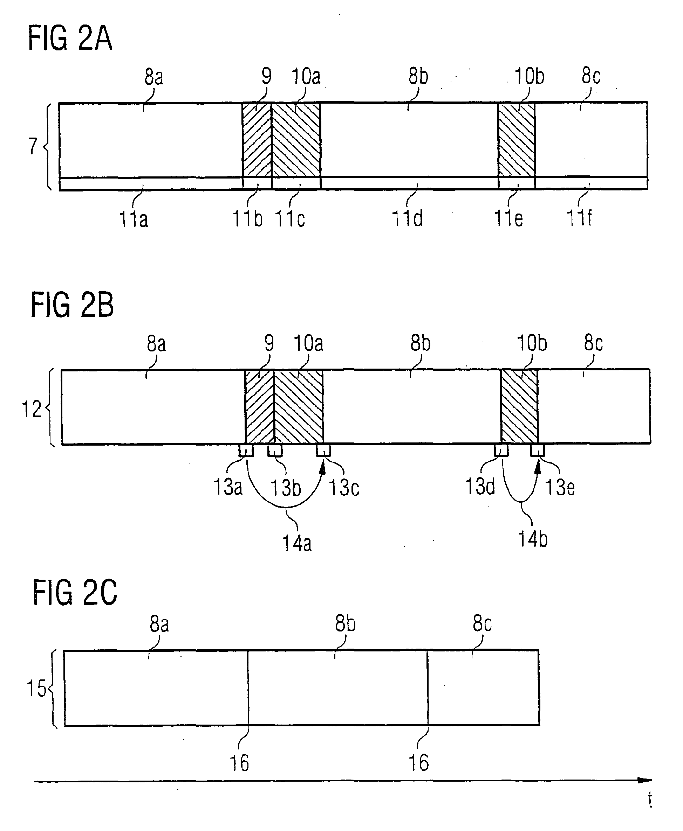

Figur 2 zeigt ein zeitliches Diagramm eines digitalen Datenstroms mit darin enthaltenen Codierungsparametern. Teilfigur 2A zeigt einen digitalen Datenstrom 7, der Programmblöcke 8, sowie Unterbrechungen 9 und 10 enthält. Zusätzlich enthält der digitale Datenstrom 7 Codierungsparameter 11.

In dem in Figur 2 dargestellten Beispiel sollen die Programmblöcke 8a, 8b sowie 8c die Bild- sowie Toninformationen eines Spielfilmes enthalten. Die zugehörigen Codierungsparameter 11a, 11d und 11f enthalten die Informationen, dass der Spielfilm in Stereoton sowie mit einem Bildverhältnis von 16:9 ausgestrahlt wird. Die Unterbrechung 9 enthält eine Programmvorschau, die ebenfalls mit dem Bildverhältnis von 16:9 ausgestrahlt wird. Jedoch verwendet die Unterbrechung 9 das sogenannte 5.1-Mehrkanaltonverfahren. Die entsprechenden Codierungsparameter 11b sind ebenso in dem digitalen Datenstrom 7 enthalten. Die Programmunterbrechungen 10a und 10b enthalten Werbeeinblendungen. Dabei enthalten die zugehörigen Codierungsparameter 11c und 11e die Informationen, dass die Unterbrechungen 10a und 10b im Stereoton ausgestrahlt werden und das verwendete Bildformat ein Seitenverhältnis von 4:3 besitzt.

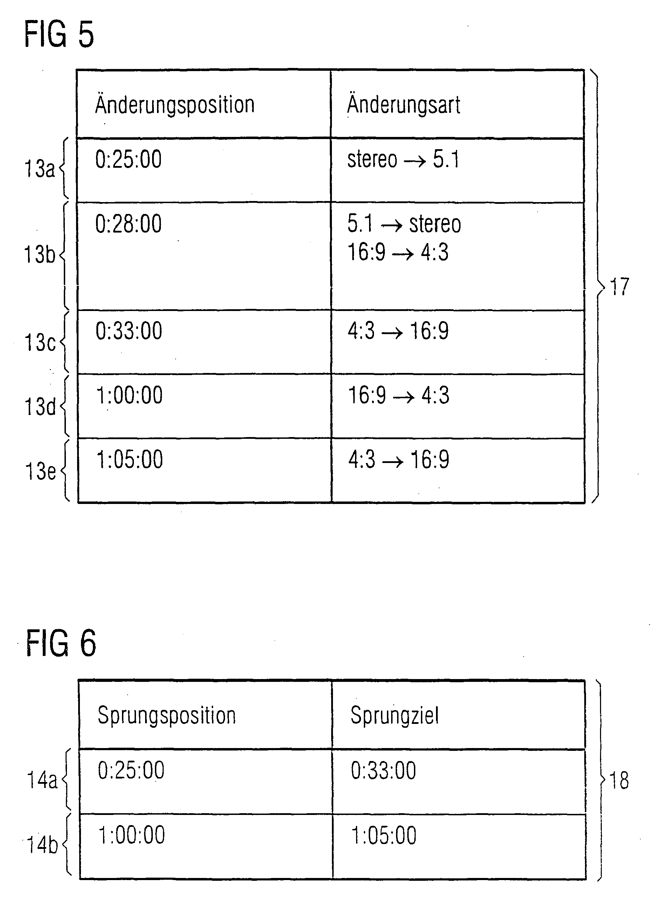

Bei der Aufzeichnung des digitalen Datenstroms 7 durch das Aufnahmegerät 1 wird der digitale Datenstrom 7 durch die Erkennungsvorrichtung 3 auf Änderungen der Codierungsparameter 11 überwacht. Dabei werden zusammen mit den Programmblöcken 8 und den Unterbrechungen 9 und 10 auch Markierungen 13 aufgezeichnet, die Änderungen der Codierungsparameter 11 kennzeichnen. Die Markierungen 13 können beispielsweise direkt in dem aufgezeichneten Datenstrom 12 oder in einer Tabelle in einer separaten Datei aufgezeichnet werden. Eine Tabelle 17 mit den entsprechenden Informationen für das Ausführungsbeispiel ist in der Figur 5 dargestellt.

Figur 2B zeigt den aufgezeichneten digitalen Datenstrom 12. Der aufgezeichnete Datenstrom 12 enthält die Programmblöcke 8, sowie die Unterbrechungen 9 und 10. Im Ausführungsbeispiel enthält der aufgezeichnete Datenstrom 12 zusätzlich die von der Erkennungsvorrichtung 3 erzeugten Markierungen 13. Die Markierung 13a kennzeichnet den Übergang von Stereoton auf 5.1-Mehrkanalton. Die Markierung 13b kennzeichnet den Übergang von 5.1-Mehrkanalton auf Stereoton sowie den Übergang von einem Bildverhältnis von 16:9 zu einem Bildverhältnis von 4:3. Die Markierung 13c enthält Informationen über einen Übergang von einem Bildverhältnis von 4:3 zu einem Bildverhältnis von 16:9. Die Markierung 13d enthält die Information von einem Übergang vom Bildverhältnis von 16:9 zu einem Bildverhältnis von 4:3, und die Markierung 13e enthält die Information über einen Übergang von einem Bildverhältnis von 4:3 zu einem Bildverhältnis von 16:9.

Während der Wiedergabe des aufgezeichneten Datenstroms 12 durch das Aufnahmegerät 1 und die Wiedergabevorrichtung 6 werden die Markierungen 13 analysiert, beispielsweise durch die Erkennungsvorrichtung 3.

Im verwendeten Beispiel sind dabei weder die Informationen über das verwendete Bildverhältnis noch die Informationen über die Anzahl der aufgezeichneten Tonspuren allein ausreichend, um die Unterbrechungen 9 und 10 zu erkennen. Durch eine Kombination unterschiedlicher Codierungsparameter 11 können die Programmunterbrechungen 9 und 10 jedoch sicher erkannt werden. Dabei kann durch eine Auswertung der in den Markierungen 13 enthaltenen Information erkannt werden, dass sich die Information der Markierung 13a, 13b und 13c insgesamt aufheben, ebenso wie die in den Markierungen 13d und 13e enthaltenen Informationen.

Während der Wiedergabe des aufgezeichneten digitalen Datenstromes 12 können die Unterbrechungen 9 und 10 daher durch einen Sprung 14a von der Schnittmarke 13a zur Schnittmarke 13c bzw. durch einen Sprung 14b von der Schnittmarke 13d zur Schnittmarke 13e von der Wiedergabe ausgeschlossen werden. Informationen über während der Wiedergabe zu verwendende Sprünge 14 können ebenfalls entweder in dem aufgezeichneten Datenstrom 12 selbst untergebracht werden oder in einer separaten, dem Datenstrom 12 zugeordneten Tabelle 18 oder Datei gespeichert werden. Figur 6 zeigt eine separate Tabelle 18 mit Informationen über die zwei Sprünge 14a und 14b des Ausführungsbeispiels.

Die Wiedergabe eines erfindungsgemäß aufgezeichneten Datenstroms 12 kann auf zwei unterschiedliche Arten erfolgen. Bei der ersten Methode zur Wiedergabe werden die in den Markierungen 13 enthalten Informationen zeitnah zur Wiedergabe des aufgezeichneten Datenstroms 12 ausgewertet und zur Steuerung der Wiedergabe verwendet. Bei der zweiten Methode erfolgt die gesamte Auswertung aller Markierungen 13 vor Beginn der Wiedergabe, wobei das Resultat zur späteren Verwendung auch gespeichert werden kann.

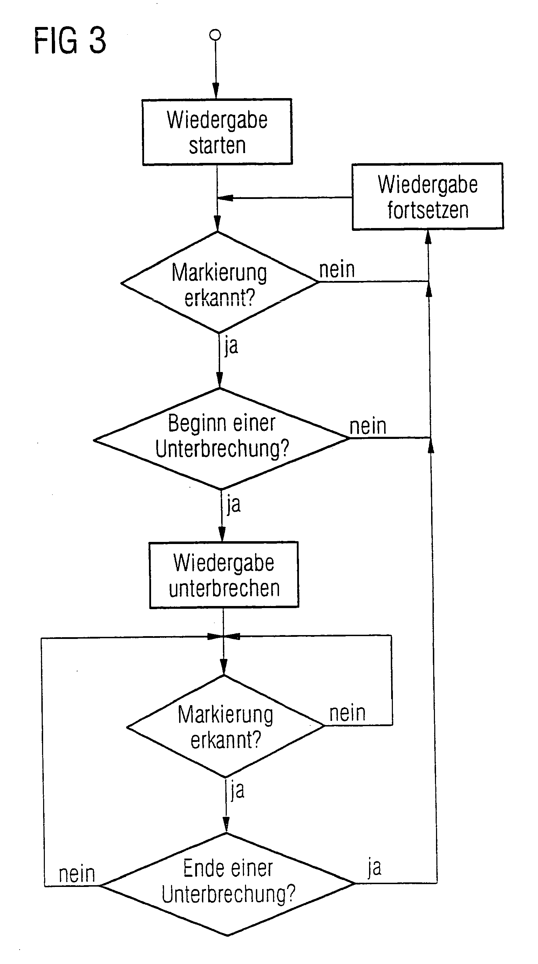

In Figur 3 ist ein Ablaufdiagram für ein erstes Verfahren zur Wiedergabe eines erfindungsgemäß aufgezeichneten digitalen Datenstroms 12 dargestellt. Nach dem Starten der Wiedergabe wird der aufgezeichnete Datenstrom 12 auf Markierungen 13 überwacht, die entweder in dem Datenstrom 12 enthalten sind oder zeitnah aus einer zugehörigen Tabelle 17 mit Änderungen von Codierungsparametern 11 eingelesen werden. Solange keine Markierung 13 erkannt wird, wird die Wiedergabe des Datenstroms 12 fortgesetzt. Wird eine Markierung 13 erkannt, wird beispielsweise durch die Erkennungsvorrichtung 3 anhand vorbestimmter Kriterien geprüft, ob die erkannte Markierung 13 den Beginn einer Unterbrechung 9 oder 10 kennzeichnet. Kennzeichnet die Markierung 13 nicht den Begin einer Unterbrechung 9 oder 10 wird die Wiedergabe wie zuvor fortgesetzt, das heißt, der wiedergegebenen Datenstrom 12 wird, gegebenenfalls unter Verwendung der Tabelle 17, weiter auf Markierungen 13 überwacht.

Kennzeichnet die Markierung 13 dagegen den Beginn einer Unterbrechung 9 oder 10 in dem Datenstrom 12, wird die Wiedergabe des Datenstroms 12 durch die Wiedergabevorrichtung 6 unterbrochen. Der Datenstrom 12 oder die Tabelle 17 werden dann auf weitere Markierungen 13 hin abgesucht. Dabei kann der aufgezeichnete Datenstrom 12 beispielsweise in höheren Geschwindigkeit als für die Wiedergabe benötigt verarbeitet werden. Alternativ kann auch die Tabelle 17 mit Informationen über Positionsangaben aller in dem Datenstrom 12 vorkommenden Markierungen 13 verwendet werden, die ein direktes Anspringen einzelner Markierungen 13 erlauben.

Wird eine weitere Markierung 13 in dem Datenstrom 12 oder der Tabelle 17 gefunden, wird in einem nächsten Schritt überprüft, ob die gefundene Markierung 13 das Ende einer Unterbrechung 9 oder 10 kennzeichnet. Kennzeichnet die erkannte Markierung 13 nicht das Ende einer Unterbrechung 9 oder 10, wie beispielsweise die Markierung 13b der Figur 2B, wird der Suchvorgang für die nächste Markierung 13 in dem Datenstrom 12 bzw. der Tabelle 17 wie oben beschrieben fortgesetzt. Kennzeichnet die erkannte Markierung 13 dagegen das Ende einer Unterbrechung 9 oder 10, wie beispielsweise die Markierung 13c der Figur 2B, wird die Wiedergabe des Datenstrom 12 an der durch die Markierung 13 gekennzeichneten Stelle wie oben beschrieben fortgesetzt.

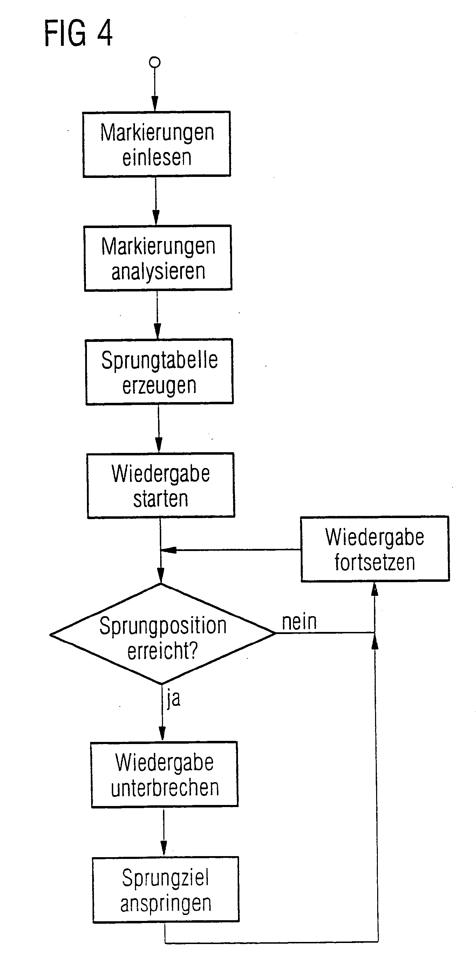

Figur 4 zeigt ein Ablaufdiagramm eines zweiten Verfahrens zur Wiedergabe eines aufgezeichneten Datenstroms 12. Dabei werden in einem ersten Schritt zunächst sämtliche Markierungen 13, die Änderungen zumindest eines Codierungsparameters 12 kennzeichnen, eingelesen. Die kann beispielsweise von einem Programm zur Wiedergabe des aufgezeichneten Datenstrom 12 durch einen Computer oder einem anderen zur Wiedergabe des Datenstroms 12 geeigneten Gerät vorgenommen werden. Dabei ist es vorteilhaft, wenn alle Markierungen zusammen in einer verhältnismäßig kleinen Datei bzw. Tabelle 17 gespeichert sind, so dass nicht der gesamte Datenstrom 12 nach Markierungen 13 abgesucht werden muss.

In einem zweiten Schritt werden die eingelesenen Markierungen 13 analysiert. Beispielsweise können Gruppen von Markierungen 13 gebildet werden, die sich gegenseitig in Ihrer Wirkung aufheben. Zum Beispiel kann eine erste Markierung 13, die einen Übergang von Stereoton zu Monoton kennzeichnet, mit einer zweiten Markierung 13 gruppiert werden, die den Übergangs von Monoton zu Stereoton kennzeichnet. Eine andere sinnvolle Gruppierung ist die bereits erläuterte Kombination der Markierungen 13a, 13b und 13c des Ausführungsbeispiels.

Auch andere Analysemöglichkeiten können allein oder in Kombination eingesetzt werden. Beispielsweise treten Werbeunterbrechungen 10 in der Regel mit regelmäßigen Abständen auf und haben eine ähnliche Längenausdehnung. Eine statische Auswertung oder Mustererkennung der Markierungen 13 kann daher ebenfalls als Analysemittel eingesetzt werden.

In einem nächsten Schritt wird eine Sprungtabelle 18 zum Überspringen der Unterbrechungen 9 oder 10 aus den analysierten Markierungen 13 erzeugt. Dabei enthält die Sprungtabelle 18 Einträge in der Form einer Sprungposition mit einem zugehörigen Sprungziel für jeden während der Wiedergabe durchzuführenden Sprung 14. Beispielsweise kann dabei die jeweils zeitlich erste Markierung 13 einer Gruppe von zusammengehörigen Markierungen als Sprungposition vermerkt werden und die jeweils zeitlich letzte Markierung 13 als Sprungziel verwendet werden.

Dabei ist es vorteilhaft, wenn die Sprungtabelle 18 nur einmal erstellt wird und dann für zukünftige Wiedergaben des aufgezeichneten Datenstroms 12 aufbewahrt wird, beispielsweise durch Sichern in einer dem Datenstrom 12 zugeordneten separaten Datei. Dies kann beispielsweise am Ende der Aufzeichnung oder zum Zeitpunkt der ersten Wiedergabe erfolgen. Eine solche zwischengespeicherte Sprungtabelle 18 kann dann bei jeder nachfolgenden Wiedergabe eingelesen werden, so dass ein erneutes Einlesen der einzelnen Markierung 13 und dessen Analyse unterbleiben kann.

Nach Erstellen bzw. Einlesen der Sprungtabelle 18 wird die Wiedergabe des aufgezeichneten Datenstroms 12 gestartet. Dabei wird fortlaufend geprüft, ob eine Sprungposition der Sprungtabelle 18 erreicht wurde. Solange keine Sprungposition erreicht ist, wird die Wiedergabe wie zuvor fortgesetzt.

Wird eine Sprungposition erreicht, wird die Wiedergabe des aufgezeichneten Datenstroms 12 unterbrochen. Daraufhin wird direkt die Stelle in dem Datenstrom 12 angesprungen, die dem der Sprungposition zugeordneten Sprungziel entspricht. Von dieser Stelle an wird die Wiedergabe des Datenstroms 12 wie oben beschrieben fortgesetzt, das heißt, es wird wieder geprüft, ob bei der Wiedergabe eine Sprungposition erreicht wird.

Selbstverständlich kann die Wiedergabe des aufgezeichneten Datenstroms 12 zu jedem Zeitpunkt abgebrochen bzw. beendet werden, auch wenn ein solcher Abbruch bzw. ein solches Beenden der Wiedergabe nicht in dem Ablaufdiagram der Figur 3 bzw. Figur 4 dargestellt ist. Beispielsweise kann die Wiedergabe durch Anforderung des Benutzers an das Aufzeichnungsgerät 1 oder die Wiedergabevorrichtung 6 beendet werden. Auch ein automatisches Ende der Wiedergabe am Ende des aufgezeichneten Datenstroms 12 ist sinnvoll und aus der Praxis bekannt.

Alternativ zur Wiedergabe kann der digitale Datenstrom 7 oder 12 unter Verwendung der erzeugten Ereignissignale bzw. Markierungen 13 oder der erzeugten Sprungtabelle 18 auch geschnitten werden. Die Figur 2C zeigt einen geschnittenen digitalen Datenstrom 15. Der geschnittene digitale Datenstrom 15 besteht aus den Programmblöcken 8a, 8b und 8c. Alle zusätzlichen Informationen wie z.B. die Unterbrechungen 9 und 10 sowie die Markierung 13 sind in den geschnittenen digitalen Datenstrom 15 nicht mehr enthalten.

Der geschnittene digitale Datenstrom 15 kann beispielsweise durch ein Verfahren erzeugt werden, das die durch das zweite Verfahren zur Wiedergabe des Datenstrom 12 erzeugte Tabelle 18 mit Sprunginformationen nutzt. Die durch einen Sprung 14 übersprungenen Unterbrechungen 9 und 10 werden dazu aus dem geschnittenen Datenstrom 15 entfernt, beispielsweise durch Umkopieren des aufgezeichneten Datenstroms 12 unter Auslassung der Unterbrechungen 9 und 10.

Alternativ können auch die Markierungen 13 zur Bestimmung von Schnittstellen 16 genutzt werden. Dazu können beispielsweise einem Benutzer des Aufnahmegerätes 1 mögliche Schnittstellen 16 des aufgezeichneten digitalen Datenstromes 12 zum Schnitt vorgeschlagen werden. Der Benutzer des Aufnahmegerätes 1 kann jede vorgeschlagene Schnittstelle 16 unter Verwendung eines geeigneten Eingabemittels, wie z.B. einer Fernbedienung, entweder annehmen, ablehnen oder ändern, zum Beispiel durch Verschieben der zugehörigen Markierung 13 weiter nach vorn oder hinten. Auch neue Markierungen 13 bzw. Schnittmarken 16 können durch den Benutzer eingeführt werden, die nicht durch die Erkennungsvorrichtung 3 erkannt wurden. Im in der Figur 2 gezeigten Beispiel kann ein Benutzer z.B. die Markierungen 13a und 13c sowie 13d und 13e als Schnittmarken auswählen und die Schnittmarke 13b ablehnen. Aus den ausgewählten Markierungen 13a und 13c bzw. 13d und 13e werden Schnittstellen 16 in dem geschnittenen digitalen Datenstrom 15.

Natürlich können die sonst für die Erzeugung von Markierungen 13 verwendeten Ereignissignale auch direkt und automatisch durch das Aufnahmegerät 1 genutzt werden. Werden die Schnittstellen 16 schon während der Aufzeichnung des digitalen Datenstroms 7 durch entsprechende Ereignissignale erkannt, so können die Unterbrechungen 9 und 10 schon während der Aufnahme von der Aufzeichnung ausgeschlossen werden. In diesem Fall werden Markierungen 13 erst gar nicht erzeugt und aufgezeichnet. Stattdessen wird die. Aufzeichnung des digitale Datenstroms 7 direkt durch das Erkennen von Änderungen in den Codierungsparametern 11 gesteuert. Beispielsweise kann die Aufzeichnung des Datenstroms 7 durch die Aufzeichnungsvorrichtung 4 beim Erkennen eines ersten Ereignissignals, das eine vorbestimmte Änderung der Codierungsparameter 11 kennzeichnet, unterbrochen werden und beim Erkennen eines zweiten Ereignissignals wieder fortgesetzt werden. Beim Auftreten weitere Unterbrechungen 9 oder 10 wird die Aufnahme des Datenstroms 7 erneut unterbrochen.

Das Herausschneiden von Programmunterbrechungen 9 und 10 hat den zusätzlichen Vorteil, dass der geschnittene digitale Datenstrom 15 kürzer als der ursprüngliche digitale Datenstrom 7 ist, sodass die Aufzeichnungsvorrichtung 4 bzw. das von ihr verwendete Aufzeichnungsmedium weniger Aufzeichnungskapazität besitzen muss.

### Bezugszeichenliste

- 1: Aufnahmegerät
- 2: Empfangsvorrichtung
- 3: Erkennungsvorrichtung
- 4: Aufzeichnungsvorrichtung
- 5: Antenne
- 6: Wiedergabevorrichtung
- 7: digitaler Datenstrom
- 8: Programmblock
- 9: Unterbrechung
- 10: Unterbrechung
- 11: Codierungsparameter
- 12: aufgezeichneter digitaler Datenstrom
- 13: Markierung
- 14: Sprung
- 15: geschnittener digitaler Datenstrom
- 16: Schnittstellen
- 17: Markierungstabelle
- 18: Sprungtabelle

## Patentansprüche

1. Verfahren zur Aufzeichnung eines digitalen Datenstromes (7) mit darin enthaltenen Codierungsparametern (11) zur Benutzung mit einem Gerät (1) der Unterhaltungselektronik mit einer Empfangsvorrichtung (2) zum Empfang eines digitalen Datenstromes (7), einer Aufzeichnungsvorrichtung (4) zum Aufzeichnen des digitalen Datenstromes (7) und einer Erkennungsvorrichtung (3) zum Erkennen von vorbestimmten Codierungsparametern (11) des digitalen Datenstroms (7),
**dadurch gekennzeichnet, dass**
beim Aufzeichnen des digitalen Datenstroms (7) folgende Schritte ausgeführt werden:
a) Überwachen des digitalen Datenstroms (7) auf Änderungen zumindest eines vorbestimmten Codierungsparameters (11) durch die Erkennungsvorrichtung (3),
b) Erzeugen eines Ereignissignals (13), wenn eine Änderung von mindestens einem der vorbestimmten Codierungsparameter (11) erkannt wird.

2. Verfahren nach Anspruch 1,
**dadurch gekennzeichnet, dass**
im Schritt a) mindestens zwei vorbestimmte Codierungsparameter (11) überwacht werden und im Schritt b) ein Ereignissignal (13) erzeugt wird, wenn eine gleichzeitige Änderung der mindestens zwei vorbestimmten Codierungsparameter (11) erkannt wird.

3. Verfahren nach Anspruch 1 oder 2,
**dadurch gekennzeichnet, dass**
im Schritt b) Markierungen (13) in dem aufgezeichneten Datenstrom (12) eingefügt werden, wenn eine Änderung der vorbestimmten Codierungsparameter (11) erkannt wird.

4. Verfahren nach Anspruch 1 oder 2,
**dadurch gekennzeichnet, dass**
durch das Verfahren eine Tabelle (17) erzeugt wird und beim Erkennen einer Änderung der vorbestimmten Codierungsparameter (11) im Schritt b) jeweils ein Tabelleneintrag (13) erzeugt wird, der die Positionen und die Art der Änderung umfasst.

5. Verfahren nach Anspruch 4,
**dadurch gekennzeichnet, dass** die erzeugte Tabelle 17 in einer separaten Datei gespeichert wird.

6. Verfahren nach einem der Ansprüche 1 bis 5,
**dadurch gekennzeichnet, dass**
es sich bei dem digitalen Datenstrom (7) um ein digitales Radio- bzw. Fernsehsignal (8) handelt.

7. Verfahren nach Anspruch 6,
**dadurch gekennzeichnet, dass**
das digitale Radio- bzw. Fernsehsignal (8) in einem der folgenden Formate vorliegt: MP3, AAC, DAB, MPEG-1, MPEG-2, MPEG-4, MPEG-7, MPEG-21, DVB.

8. Verfahren nach Anspruch 6 oder 7,
**dadurch gekennzeichnet, dass**
die in dem digitalen Radio- bzw. Fernsehsignal (8) enthaltenen Codierungsparameter (11) wenigstens eines der folgenden Merkmale umfassen: Bildauflösung, Bildformat, Seitenverhältnis des Bildes, verwendetes Codierungsverfahren und -format, Anzahl der Tonspuren, Art der Tonspuren, Abtastfrequenz der Tonspuren, Lautstärke.

9. Verfahren nach Anspruch 1,
**dadurch gekennzeichnet, dass**
die Aufzeichnung des digitalen Datenstroms (7) beim Erkennen eines ersten und jedes weiteren ungeradzahligen, im Schritt b) erzeugten Ereignissignals (13) unterbrochen wird und beim Erkennen eines zweiten und jedes weiteren geradzahligen im Schritt b) erzeugten Ereignissignals (13) fortgesetzt wird.

10. Verfahren zur Wiedergabe eines digitalen Datenstromes (7) mit zugehörigen Markierungen (13) durch ein Gerät der Unterhaltungselektronik (1) mit einer Wiedergabevorrichtung (6) zum Wiedergeben eines digitalen Datenstromes (7), das die folgenden Schritte umfasst:
- Bereitstellen eines aufgezeichneten Datenstromes (12), der mit einem Verfahren-gemäß einem der Anspruch 3 bis 5 aufgezeichnet wurde,
- Einlesen aller dem Datenstrom (12) zugeordneten Markierungen (13),
- Auswählen von Markierungen (13), die während der Wiedergabe den Beginn bzw. das Ende von Unterbrechungen (9; 10) des digitalen Datenstromes (12) markieren,
- Erzeugen von Information über Sprünge (14) vom Beginn zum Ende einer Unterbrechung (9; 10);
- Wiedergabe des aufgezeichneten Datenstromes (12) durch die Wiedergabevorrichtung (6),
- Überwachen des wiedergegebenen Datenstromes (12) auf Startpositionen eines Sprunges (14),
- Überspringen von Teilen des digitalen Datenstromes (12) durch einen Sprung (14) zum Ende der zugehörigen Unterbrechung (9; 10) während der Wiedergabe.

11. Verfahren zur Wiedergabe eines digitalen Datenstromes (7) mit zugehörigen Markierungen (13) durch ein Gerät (1) der Unterhaltungselektronik mit einer Wiedergabevorrichtung (6) zum Wiedergeben eines digitalen Datenstromes (7), das die folgenden Schritte umfasst:
- Bereitstellen eines aufgezeichneten Datenstromes (12), der mit einem Verfahren gemäß einem der Ansprüche 3 bis 5 aufgezeichnet wurde,
- Bereitstellen von Markierungen (13), die dem aufgezeichneten Datenstrom (12) zugeordnet sind,
- Wiedergabe des aufgezeichneten Datenstromes (12) durch die Wiedergabevorrichtung (6),
- Überwachen des wiedergegebenen Datenstromes (12) auf der aktuellen Position zugeordneten Markierungen (13),
- Unterbrechen der Wiedergabe des digitalen Datenstromes (12), wenn eine erste Markierung (13) erkannt wurde, die den Beginn einer Unterbrechung (9; 10) kennzeichnet.
- Fortsetzten der Wiedergabe des digitalen Datenstromes (12), wenn eine zweite Markierung (13) erkannt wurde, die das Ende einer Unterbrechung (9; 10) kennzeichnet.

12. Verfahren zum Schneiden eines digitalen Datenstromes (12) mit zugehörigen Markierungen (13) durch ein Gerät (1) der Unterhaltungselektronik mit einer Schnittvorrichtung zum Schneiden eines digitalen Datenstromes (12), das die folgenden Schritte umfasst:
- Bereitstellen eines aufgezeichneten Datenstromes (12) mit dazugehörigen Markierungen (13), der mit einem Verfahren gemäß einem der Ansprüche 3 bis 5 aufgezeichnet wurde,
- Auswählen von Markierungen (13), die Schnittmarken (16) des digitalen Datenstromes (12) markieren,
- Durchsuchen des digitalen Datenstromes (12) auf darin enthaltene Markierungen (13),
- Schneiden des digitalen Datenstromes (12) an ausgewählten Markierungen (13) durch die Schnittvorrichtung.

13. Verfahren nach einem der Ansprüche 10 bis 12,
**dadurch gekennzeichnet, dass**
der Schritt des Auswählens von Markierungen (13) durch eine statistische Auswertung der Markierungen (13) vorgenommen wird.

14. Verfahren nach einem der Ansprüche 10 bis 12,
**dadurch gekennzeichnet, dass**
der Schritt des Auswählens von Markierungen (13) durch einen Benutzer vorgenommen wird.

15. Verfahren nach Anspruch 14,
**dadurch gekennzeichnet, dass**
im Schritt des Auswählens von Markierungen (13) durch einen Benutzer bestehende Markierungen änderbar sind oder zusätzliche Markierungen (13) einfügbar sind.

16. Gerät (1) der Unterhaltungselektronik, aufweisend
- eine Empfangsvorrichtung (2) zum Empfang eines digitalen Datenstroms (7),
- eine Aufzeichnungsvorrichtung (4.) zum Aufzeichnen des digitalen Datenstroms (7),
- eine Erkennungsvorrichtung (3) zum Erkennen vorbestimmter Codierungsparameter (11) des digitalen Datenstroms (7),
**dadurch gekennzeichnet, dass** das Gerät der Unterhaltungselektronik zum Durchführen eines Verfahrens gemäß einem der Ansprüche 1 bis 15 eingerichtet ist.

17. Computerprogramm-Produkt mit Programmcode zum Durchführen eines Verfahrens nach einem der Ansprüche 1 bis 15, wenn das Programm auf einem Rechner abläuft.
